# EUROPÄISCHE PATENTSCHRIFT

(11) **EP 3 961 027 B1**
(45) Veröffentlichungstag und Bekanntmachung des Hinweises auf die Patenterteilung: **12.10.2022**
(21) Anmeldenummer: 20192530.2
(22) Anmeldetag: 25.08.2020
(51) Int. Cl.: F03D 3/02, F03D 9/46, F03D 15/10

(54) **MEHRTURBINEN-WINDANTRIEB ZUR NUTZUNG DES FAHRTWINDES VON KRAFTFAHRZEUGEN**
MULTIPLE TURBINE WIND DRIVE FOR USING THE ONCOMING AIR OF MOTOR VEHICLES
PROPULSION ÉOLIENNE À TURBINES MULTIPLES POUR UTILISER LE VENT DE VITESSE DES VÉHICULES AUTOMOBILES

(43) Veröffentlichungstag der Anmeldung: 02.03.2022
(73) Patentinhaber: Awingen GmbH, 60438 Frankfurt am Main (DE)
(72) Erfinder: KOLESNIKOV, Anton, 60438 Frankfurt am Main (DE)
(74) Vertreter: Tergau & Walkenhorst Patentanwälte PartGmbB

(56) Entgegenhaltungen:
- EP-A1- 3 070 328
- EP-B1- 3 070 328
- US-A- 5 272 378
- US-A1- 2009 224 552

## Beschreibung

Die Erfindung betrifft eine Windkraftanlage zur Nutzung des Fahrtwindes von Kraftfahrzeugen.

Aus der DE 103 30 601 A1 ist eine Windkraftanlage bekannt, die im Bereich des Mittelstreifens zwischen zwei in entgegengesetzter Richtung zu befahrenden Fahrstreifen angeordnet und damit so positioniert ist, dass die durch vorbeifahrende Fahrzeuge ausgelösten Winde aufgenommen, abgeleitet und in Energie umgewandelt werden können. Die zur Vermeidung gegenseitiger Beeinflussung einzeln in relativ großen Abständen von mindestens 10 m voneinander aufgestellten Windrotoren mit vertikaler Drehachse führen in der Praxis jedoch zu einer geringen Energieausbeute.

Aus der US 5 272 378 A und der EP 3 070 328 A1 sind jeweils Windkraftanlagen bekannt mit den Merkmalen des Oberbegriffs von Anspruch 1.

Aufgabe der Erfindung ist es, eine Windkraftanlage zur Nutzung des Fahrtwindes von Kraftfahrzeugen anzugeben, die bei einfach und kostengünstig gehaltenem Aufbau zuverlässig und sicher betrieben werden kann und dabei eine hohe Energieausbeute ermöglicht.

Die Aufgabe wird erfindungsgemäß gelöst durch eine Windkraftanlage mit den Merkmalen des Anspruchs 1.

Demnach ist eine Windkraftanlage zur Nutzung des Fahrtwindes von Kraftfahrzeugen vorgesehen mit einer Mehrzahl von Windturbinen mit jeweils vertikaler

Drehachse, die in einer Reihe hintereinander in einem Stützgerüst angeordnet sind, wobei die Windturbinen über einen Rotationsübertragungsmechanismus eine gemeinsame Abtriebswelle antreiben, und wobei der Rotationsübertragungsmechanismus nach Art eines Schubkurbelgetriebes aufgebaut ist.

Weitere Merkmale, Aufgaben, Vorteile und Ausgestaltungen gehen aus den abhängigen Ansprüchen in Verbindung mit der detaillierten Beschreibung hervor.

Ein Ausführungsbeispiel der Erfindung wird weiter unten anhand der beigefügten Zeichnungen näher erläutert. Es zeigt:
- FIG. 1: eine erste Ausführungsform eines Segments einer Mehrturbinen-Windantrieb Anlage Kolesnikov, kurz METUWAK, gemäß der Erfindung in perspektivischer Ansicht,
- FIG. 2: eine zugehörige Explosionsdarstellung,
- FIG. 3: zugehörige Ansichten und Schnitte,
- FIG. 4: eine Detaildarstellung einer METUWAK Windturbinenanordnung und eines zugehörigen Rotationsübertragungsmechanismus in verschiedenen Bewegungszuständen,
- FIG. 5: eine zweite Ausführungsform eines METUWAK Segments in perspektivischer Ansicht,
- FIG. 6: zugehörige Ansichten,
- FIG. 7: eine METUWAK Anwendung entlang einer Autobahn, und
- FIG. 8: eine METUWAK Anwendung entlang einer Bahnschiene.

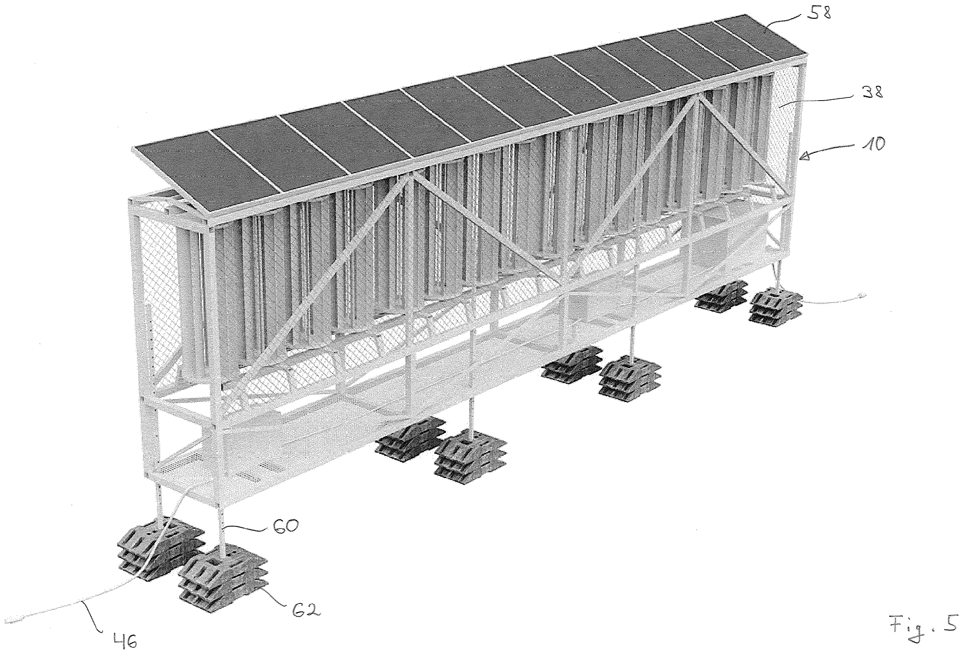

Zur Vereinfachung verwendete Positions- und Richtungsangaben wie "oben" oder "unten" beziehen sich auf die in den Figuren dargestellte übliche Montageanordnung. In den Figuren eingezeichnete und in der Beschreibung verwendete Dimensionsangaben dienen lediglich zur Veranschaulichung typischer, vorteilhafter Größenordnungen. Die verschiedenen Varianten können in jeder sinnvollen Weise miteinander kombiniert werden. Beispielsweise ist die Ausführung mit integrierten Straßenlaternen auch bei der Ausführungsform gemäß FIG. 5 möglich, auch wenn dies nicht ausdrücklich im Text erwähnt ist.

Die Mehrturbinen-Windantrieb Anlage Kolesnikov gemäß der Erfindung wird im Folgenden als METUWAK bezeichnet.

### 1. Die Konstruktion der METUWAK im Überblick

1.1 Die Anlage besteht unter anderem aus der harten dreieckigen oder viereckigen Stützkonstruktion (im folgenden Kassette genannt) mit einer bevorzugten Länge von 6000 mm, die auf der oder in der Betonleitplanke der Mitteltrennung einer Autobahn, Bundesstraße etc. eingebaut wird. Darin sind in den Lagerhäusern einige (abhängig von der Größe) stehende Windturbinen eingebaut, die sich um die vertikale Drehachse herum entgegen dem Uhrzeigersinn (oder mit dem Uhrzeigersinn bei Linksverkehr) drehen können. Diese Windturbinen werden durch die Luftströmungen der vorbeifahrenden Autos aufgedreht bzw. angetrieben.

Die geometrischen Abmessungen der Kassette werden entsprechend den Anforderungen an den effizienten Transport zum Installationsort und entsprechend der Breite der Beton- (oder Metall-) Leitbleche des Fahrbahntrennstreifens ausgewählt. Die Breite der Kassette (Außenabmessung) ist vorzugsweise ein Vielfaches (gemeint ist hier ein Teiler) der Breite des Standard-LKW-Aufbaus (2400 mm) und beträgt 600 mm, 800 mm oder 1200 mm. Auf diese Weise können 4, 3 oder 2 Kassetten nebeneinandergestellt werden. Die Länge der Kassette ist ein Vielfaches der Standardlänge des Profilrohrs und beträgt 3000 mm oder 6000 mm. Die Höhe der Kassette wird als ein Vielfaches (gemeint ist hier ein Teiler) von 6000 mm ausgewählt, dadurch werden Metallabfälle und Ausschuss minimiert.

Die Kassetten der METUWAK werden sequenziell Stück für Stück auf den (oder in den) Leitplanken der Fahrbahnen eingebaut und miteinander mit der Anschlussleitung oder mit dem Verbund- und Steuerkabel gebunden. Die Kassetten bilden Segmente verschiedener Länge.

1.2 Rotierende Windturbinen übertragen über einen Rotationsübertragungsmechanismus (im Folgenden als RÜM bezeichnet), das gesamte (Summen-) Drehmoment von allen (bevorzugt 5 bis 30 Stück) Windturbinen an den Drehmomentempfänger. Die RÜM besteht hier im Beispiel aus zwei Ausgleichsbalken, die über Scharniere mit den Turbinen und der Achse des Empfängers verbunden sind.

Drehmomentempfänger ist:
a) entweder ein Kassettenelektrogenerator, der sofort Strom erzeugt;
b) oder ein Kompressor, der als "Arbeitskörper" Druckluft erzeugt;
c) ein Schwungrad oder Superschwungrad, das kinetische Energie speichert (z.B. das Chakratec-Speichergerät oder die Schwungräder von Herrn Nurbei Guliy). Das Schwungrad ist heute der energieeffizienteste mechanische Energiespeicher, der bekannt ist.
d) oder ein Reduktionsgetriebe, das die Betriebsgeschwindigkeit des Empfangsgeräts liefert;
e) oder jeder andere RÜM;
f) oder eine Kombination aus den genannten Möglichkeiten.

Der Mechanismus zur Aufnahme von Drehbewegungen erzeugt "Leistung" (als physikalische Größe).

Der Generator erzeugt sofort Strom.

Ein Kompressor oder Luftzylinder erzeugt Druckluft zur weiteren Speicherung und Verwendung in verschiedenen Geräten (z.B. Druckluftmotoren).

Die "Leistung" als METUWAK-Produkt (oder als physikalische Einheit) kann dazu verwendet werden, Wasser in die Höhe zu heben und in Tanks zu speichern, um es anschließend in die Schaufeln von Hydraulikturbinen abzuleiten und Strom zu erzeugen (Prinzip eines Pumpspeicherkraftwerks).

Das Schwungrad speichert kinetische Energie, die von einem Generator schnell in elektrische Energie umgewandelt werden kann. Mit den Schwungrädern können Spannungsspitzen im Netz ausgeglichen werden.

1.3 Die am Ausgang empfangene elektrische Energie wird über Verbindungskabel an eine Kassettenbatterie (im Folgenden als KAB bezeichnet) übertragen, um den Generator zu betreiben und die Steuergeräte zu versorgen oder externe Verbraucher zu versorgen, etwa:
auf Netzwerkspeichergeräte;
oder zu den Ladestationen für Elektroautos auf Parkplätzen, die sich entlang der Autobahnen befinden (insbesondere diejenigen ohne Tankstellen, aber nur mit Toiletten und Rastplätzen);
oder an das Stromnetz der Region;
oder zur sofortigen Herstellung von umweltfreundlichem (grünem) Wasserstoff (H2) auf Parkplätzen durch Mini-Wasserhydrolyse Stationen, die Wasserstofffahrzeuge sofort betanken oder an die Industrie schicken können;
oder die starr an der Kassette angebrachten Scheinwerfer zu betreiben, die nachts die Fahrbahn ausleuchten und so den Komfort und die Verkehrssicherheit erhöhen.

### METUWAK besteht aus:

a) Einer Kassette (harte Stützkonstruktion) (streng notwendig);
b) Den stehenden Turbinen (streng notwendig);
c) Den Bauelementen der Lageraufhängung (streng notwendig);
d) Dem Rotationsübertragungsmechanismus (RÜM) (streng notwendig) - das ist Herzstück der Erfindung;
e) Kontroll- und Messgeräte Einheit (nicht notwendig);
f) Einzelnen Generatoren/Motoren, Räder für jede Turbine (nicht notwendig);
g) Der Anschlussleitung (nicht notwendig);
h) Den Steuerkabeln (nicht notwendig);
i) Den verstellbaren Fixieranlagen (montiert man nach oben auf die Ränder der Leitplanken oder innerhalb zwischen die Leitplanken auf die höheneinstellbaren Fixieranlagen mit den Beschwerungsmitteln von unten (bevorzugt);
j) Gesamtem Kassettengenerator (nicht notwendig);
k) Anleuchtgeräte für die Beleuchtung der Straße (nicht notwendig);
l) Gesamten Kassetten Akkumulatoren Batterie (nicht notwendig);
m) Abschirmmetallnetz (als Schutzmittel gegen die Bruchstücke der Turbine im Fall des Zerbrechens) (bevorzugt);
n) Anlagendeckplatte als Schutz gegen Regen und Schnee (nicht notwendig);
o) Externem Systemsteuerpult, das für die Steuerung der Systemsegmente und des Systems selbst, Datenregistrierung und Steuerwertausgabe bestimmt ist. Das Pult befindet sich außerhalb der Kassetten der METUWAK, d.h. außerhalb der Kassetteneinstellungszone. Das kann fest installiert oder transportabel sein.
p) Empfangsvorrichtungen - das sind einige Geräte, wie z.B. ein elektrischer Generator oder ein Schwungrad oder ein Reduktionsgetriebe oder ein Kompressor, die dazu bestimmt sind, "die Ergebnisse der METUWAK" zu empfangen, d.h. Energie oder Drehmoment für die anschließende Herstellung des "Arbeitskörpers".

### 2. Charakteristik der Anlagenbestandteile

### 2.1. Kassette (harte Stützkonstruktion)

Die Kassette ist dafür bestimmt, dass man an sie und innerhalb Elemente installieren und fixieren kann.

Die Kassette ist bevorzugt aus den Rechteckquerschnittmetallrohren hergestellt, die für die stabile Erhaltung und Beständigkeit der Anlage bei der Montage/Abbau und für die stabile Arbeit der Anlage bei dem starken Wind ausreichend sind.

Wenn es nötig ist, so werden die Kassetten und Turbinen mit den rostschützenden lichtabsorbierenden Stoffen bemalt bzw. gestrichen, um Lichtstellen, die die Fahrer stören, zu beseitigen.

Die Kassette hat einen Zentralquerbalken (oder Zentrallängsbalken), in den die Bauelemente der Lageraufhängung der stehenden Turbinen montiert werden, welche die freie Eigendrehung der Turbinen entgegen dem Uhrzeigersinn gewährleisten. Wenn es nötig ist, wird der Stahlausbau der einzelnen Generatoren an die Zentralquerbalken montiert.

Die Seitenfläche der Kassette ist mit der Metall- oder Netzkunststoffummantelung versorgt, die die Straße gegen die Bruchstücke der Turbine im Fall des mechanischen Schadens oder mangelhafter Fertigung schützen.

Wenn es nötig ist, können die oberen Abhänge mit einer Deckplatte gegen Wind und Regen ausgerüstet sein, die ansonsten in die Turbine kommen können.

2.2. Die Turbine der METUWAK ist ein walzenförmiges Bauwerk mit einem Durchmesser von 30 bis 120 cm, das eine metallisch hart durch die Bauelemente der Lageraufhängung durchgeführte und an die zentrale Leitplanke (Zentralquerbalken oder Zentrallängsbalken) der Kassette befestigte Zentralrotationssachse aufweist. Die untere und die obere Aluminiumturbinenradscheibe (oder aus Kunststoff oder Metall) werden hart an die metallische Stehachse befestigt. Dazwischen werden Turbinenschaufeln (von 8 bis 72 Stück abhängig von dem Durchmesser der Turbinenschaufel) hart befestigt. Die Turbinenschaufeln haben gewölbte Form und werden aus recyceltem Kunststoff oder aus dem Aluminium hergestellt. Bei der großen Höhe der Turbine kann für die Zwischenhalterung eine zusätzliche Turbinenschaufel oder Radscheibe befestigt werden, um die Konstruktion härter zu machen.

2.3. Das Bauelement der Lageraufhängung der METUWAK ist das obere und das untere Drehzapfenlager, dessen Innenteil hart an der Turbinenachse und dessen Außenteil hart an dem Zentralquerbalken der Kassette befestigt sind.

2.4. Der Rotationsübertragungsmechanismus (RÜM) - als das Hauptelement des Systems - besteht aus einem Satz (zwei oder mehr) verbindender Ausgleichsvorrichtungen aus Metall (oder Kohlefaser), von denen eine durch ein Gelenk an der Achse jeder Turbine oder mit dem Außendurchmesser der Scheibe jeder Turbine verbunden ist. Diese Elemente bewegen sich im Inneren des technischen Fachs der Kassette entlang elliptischer Kurven parallel zum Horizont, wobei sie eine hin- und hergehende Bewegung ausführen, die durch die Drehgelenke in eine Drehbewegung übergeht, die auf die Achse (Welle) der aufnehmenden Vorrichtung übertragen wird. Das bedeutet, dass der RÜM die Gesamtdrehung (d.h. das Summenmoment) aller Kassetten-Windturbinen in die Drehung der Empfangswelle (Generator, Kompressor, Schwungrad oder Getriebe) umwandelt.

Falls erforderlich, wird der RÜM mit einem Reduktionsgetriebe zur drehzahlangepassten Übertragung an den Empfänger ausgestattet.

2.5. Die Kontroll- und Messgeräte Einheit ist ein Metallcontainer mit einer Deckplatte, die den Zugang zu allen Komponenten der Baueinheit erlaubt. Hier befinden sich alle Geräte, die die Arbeit des Generators steuern (die die Elektrizität für die zwanghafte Entdrallung bis zu Arbeitsspiel anführen und die von dem Generator erzeugte Elektrizität erhalten), Gleichwechsler, Superkondensatoren, Spannungsanzeiger, Strommessgeräte, Wi-Fi Modulen, Speichergeräte. Diese Geräte passen die Werte der vom Generator erhaltenen Energie gemäß den Systemanforderungen an und übergeben sie weiter durch die Anschlusskabel an das Speichergerät oder an die Benutzer. Diese Einheit ist für das Ein- und Ausschalten der Straßenlaterne verantwortlich und übergibt per WiFi-Modul die Parameter der Systemarbeit in den Datenerfassungsplatz.

2.6. Der Generator ist ein fertiges Elektrowerkzeug, das innerhalb der Kassette montiert ist, das dank dem Drehen des Generatorschaufelrades Elektrizität erzeugt. In einer Kassette kann nur ein Generator vorhanden sein, aber von größerer Leistungsfähigkeit. Oder jede Turbine kann hart an ihren eigenen Generator kleinerer Leistungsfähigkeit angeschlossen sein. Als Generatoren werden während des Probeeinsatzes Radmotore verschiedenen Durchmessers und verschiedener Leistungsfähigkeit verwendet, wie etwa Fahrzeuggeneratoren, Bestandteile der Haushaltsgeräte, industrielle Wandeelektrowerkzeuge hoher Leistungsfähigkeit.

2.7. Die Anschlusskabel sind elektrische vieladrige Kabel bestimmten Schnittes oder ihr Bausatz, die für die Verbindung der Kassette miteinander oder für das Übergeben der erhaltenen Elektrizität an die Benutzer dienen.

2.8. Die Steuerkabel sind elektrische vieladrige Kabel, die Steuersignale an die Apparatur, Geräte der Kassette übergeben. Durch diese Kabel kann die technische Information an das äußere Systemsteuerpult übergeben werden.

2.9. Die verstellbaren Fixieranlagen sind ein aufgeständerter Stahlbau, und sind aus Metallrohren der Vierkantwelle, des Kreisquer- oder Rechteckquerschnittes ausgefertigt. Sie sind hart und kräftig genug, um die Kassetten der METUWAK robust an die Betonleitplanke der Autobahn einzustellen. Die Kassetten können auch zwischen einander eingestellt werden, zusammen mit einem Beschwerungsmittel gegen den Wind für die Standsicherung der Kassette.

2.10. Der gesamte Kassettengenerator ist ein fertiges (bei einem Lieferant gekauftes) Wandeelektrowerkzeug hoher Leistungsfähigkeit, das allen Systemanforderungen über die Leistungsfähigkeit, die Qualität der ausfahrbaren Elektrizität und den Losbrechmoment entspricht. Die Kreiselwelle der METUWAK dreht sich mit Hilfe von dem RÜM der Turbinen.

2.11. Die Anleuchtgeräte für die Beleuchtung der Straße sind fertige Befeuerungsanlagen mit der ausreichenden Leistungsfähigkeit für die Beleuchtung der Straße. Diese Geräte werden hart in einem bestimmten Winkel an die Kassette und an das Niveau befestigt, damit die Fahrer ruhig in den Rückblickspiegel sehen können, ohne geblendet zu sein. Der Einbauwinkel wird anhand allen Sicherheitsvorschriften berechnet. Die Anleuchtgeräte werden im Baumaß der Betonleitplanke befestigt und gehen aus deren Maß nicht heraus. Das sind bevorzugt LED-Leuchtmittel mit der Farbtemperatur "warm".

2.12. Die gesamte Kassetten Akkumulatoren Batterie (KAB) ist eine fertige KAB bestimmter Kapazität mit der Abgangsspannung von 12/24 V (oder jede andere Abgangsspannung) Sie ist für die primäre Energiespeicherung bestimmt, die für das vorhergehende Aufdrehen der Turbine bis zum Arbeitsspiel, für die Stromversorgung der Kontroll- und Messgeräte Einheit, für die Stromversorgung der Anleuchtgeräte und für die primäre Energiespeicherung und ihre weitere Lieferung an die Benutzer nötig ist.

2.13. Das Abschirmmetallnetz (oder Abschirmkunststoffnetz) ist ein Schutzmittel gegen die Bruchstücke der Turbine im Fall des Zerbrechens. Es befindet sich an allen Seitenflächen der Kassetten der METUWAK im Baumaß der Turbine und schützt gegen Splitterstreuung allerseits.

2.14. Die Anlagendeckplatte im oberen Teil der Kassette ist aus einem recycelten Kunststoff oder Metall gemacht. Wenn es nötig ist, ist sie mit einem rostschützenden und lichtabsorbierenden Stoff bemalt. Sie schützt die Turbine gegen Regen und Regenschnee. Eine an die Sonne gedrehte Seitenfläche der Anlagedeckplatte kann auch weiter aus Solarbatterien (Solarelementen) ausgefertigt werden und zusätzliche Elektrizität erzeugen (optional).

2.15. Das externe Systemsteuerpult ist für die Steuerung der Systemsegmente und des Systems selbst, für die Datenregistrierung und Steuerwertausgabe bestimmt. Das Pult befindet sich außerhalb der Kassetten der METUWAK, d.h. außerhalb der Kassetteneinstellungszone. Das kann fest installiert oder transportabel sein.

2.16. Ein Empfangsgerät ist ein Gerät, das Energie oder Drehmoment vom RÜM erfasst und mit deren Hilfe das Ergebnis seiner eigenen Arbeit erzeugt.

Empfangsgeräte können sein:
a) Ein allgemeiner Kassettengenerator, der sofort Strom erzeugt;
b) einen Kompressor, der als "Arbeitskörper" Druckluft erzeugt;
c) Schwungrad oder Superschwungrad, die kinetische Energie speichern (z.B. das Chakratec-Speichergerät oder die Schwungräder von Herrn Nurbei Gulius). Das Schwungrad ist heute der energiesparendste mechanische Energiespeicher aller bekannten Typen.
d) ein anderer Mechanismus zur Aufnahme der Drehbewegung, z.B. ein Reduktionsgetriebe zur Erzeugung der erforderlichen Drehgeschwindigkeit.

Der "Betrieb" als METUWAK-Produkt (oder als physikalische Einheit) kann dazu verwendet werden, Wasser in die Höhe zu heben und in Tanks zu speichern, um es anschließend in die Schaufeln der hydraulischen Turbinen abzuleiten und Strom zu erzeugen.

Das Schwungrad speichert kinetische Energie, die von einem Generator schnell in elektrische Energie umgewandelt werden kann. Die Schwungräder ermöglichen es, Überspannungen in der Netzspannung auszugleichen.

### 3. Die Kopplung der Bestandteile der METUWAK

Die Kassette der METUWAK ist das Hauptkonstruktionselement der METUWAK. Alle anderen Bestandteile werden an sie hart befestigt. Stehende Turbinen werden durch die Bauelemente der Lageraufhängung an die mittleren (obere und untere) Querbalken der Kassette befestigt.

Wenn ein allgemeiner Kassettengenerator verwendet wird, wird zusätzlich zum Generator selbst ein RÜM im Prozessraum installiert. Im Falle der Installation von Generatoren, die für jede Turbine individuell sind, werden letztere starr mit der Kassette auf der unteren (technologischen) Ebene der Kassette verbunden, im folgenden technologische Sektion genannt, was eine rechteckige Nische ist, in der auch andere Elemente der Einrichtung METUWAK installiert werden: eine Kontroll- und Messgeräte Einheit (im folgenden KuME) genannt, und die Batterie, sowie verlegte Steuer- und Verbindungskabel.

Wenn die Kassette auf den Ablenkkeil montiert wird, werden die Befestigungshalterungen zuerst "auf dem Ablenkkeil aufgesetzt" und dann, nachdem die Kassette auf Horizonthöhe eingestellt ist, fest an der Kassette befestigt.

Wenn die Kassette innerhalb der Leitbleche installiert wird, werden die Gewichte der Stützen zuerst am Boden installiert, dann werden die Stützen selbst in die Leitbleche eingeführt und die Kassette selbst wird mit einem Kran auf den Leitblechen installiert und nach Ausrichtung der Kassette auf den Horizont starr an den Stützen befestigt.

Die Kassette wird dann über Verbindungs- und Steuerkabel mit der vorherigen und der nächsten Segmentkassette verbunden.

Das System zur Befestigung der Leuchten bzw. Strahler an der Kassette (Buchsen, Verlängerungen, Stecker) wird im Werk so konstruiert und gebaut, dass die Installationswinkel gegenüber der Fahrbahn während der Installation vom Personal nicht verändert werden können.

Zusätzlich zu den Verbindungselementen werden auch die Strukturelemente elektrisch verbunden. Die Generatoren (und die Motorräder) werden von der Batterie gespeist, um Betriebsgeschwindigkeiten zu erreichen (optional), und der erzeugte Strom wird über Kabel entweder zum Verbraucher oder zur Batterie übertragen.

Alle Geräte sind zweckmäßigerweise elektrisch mit der KuME verbunden.

### 4. Die Funktionsweise der METUWAK und ihrer Bestandteile

Die Kassette der METUWAK steht fest auf den verstellbaren Fixieranlagen und ist mit den benachbarten Segmenten der Kassette durch die Kabel verbunden. Die Luftströmungen der vorbeifahrenden Autos kommen auf die Turbinenschaufel. So entsteht die Rotationsbewegung um die stehende Turbinenachse herum. Die Turbinenachsen sind hart mit dem eigenen Generator gekoppelt und werden durch den Läufer gedreht.

Beim Gebrauch des gesamten Kassettengenerators wird das Turbinendrehen durch den RÜM an den Turbinenläufer des gesamten Kassettengenerators übergeben. Die Generatoren erzeugen beim Drehen den elektrischen Strom, der entweder durch die KuME an die KAB, oder durch die Anschlusskabel an die Benutzer bzw. Abnehmer strömt.

Die KuME steuert das vorläufige Turbinendrehen (optional), die Batterieladung, Ein- und Ausschalten der Anleuchtgeräte, das Übergeben der von den Generatoren enthaltenen Energie durch die Kabel an die Benutzer bzw. Verbraucher.

Die KuME bekommt Elektrizität von allen Generatoren der Kassette, "mischt" sie, passt nach der Spannweite und Rate und anderen Parametern an. Weiter wird der Konstantstrom (oder Wechselstrom) an die Benutzer weitergegeben. Die KuME sammelt die Information über die Arbeitsparameter der Kassette und übergibt sie durch die Steuerkabel oder WiFi an das äußere Systemsteuerpult, das die ganze Information von allen Kassetten des Segmentes bearbeitet und wenn nötig, gibt die Aufgabe für die intensive Arbeit der Generatoren.

### 5. Vorteile der METUWAK gegenüber ähnlichen Anlagen

Der METUWAK hat bestimmte Vorteile vor den ähnlichen Anlagen:
5.1. Der Einbau von METUWAK an die Betonleitplanke gibt den Turbinen die Möglichkeit, sich in eine und dieselbe Seite (entgegen der Uhrzeigerrichtung) unter die Wirkung der Luftströmung der vorbeifahrenden Autos zu drehen.

5.2. Bei Verwendung eines allgemeinen Kassettengenerators mit höherer Leistung ermöglicht METUWAK die Nutzung des Drehmoments aller (5-30) Turbinen für einen Generator. In diesem Fall kann ein Generator mit einer Leistung von bis zu 20 kW (z.B. Maglev Permanentgenerator 100RPM 220 380 VDC) in die Kassette eingebaut werden. Dann beträgt die installierte Leistung von 1 Kilometer METUWAK Segmenten (20 kW × 150) = 3000 kW oder 3 MW.

5.3 METUWAK ermöglicht die Einrichtung einer Ladestation für Elektroautos auf jedem Parkplatz an der Autobahn, indem ein Segment von 5-10 km Kassetten im Bereich der künftigen Station installiert wird.

5.4 METUWAK ermöglicht die Installation einer Wasserhydrolyse Station an einem beliebigen Ort an oder in der Nähe der Autobahn, um umweltfreundlichen (grünen) Wasserstoff (H2) zu erzeugen, indem ein Segment der erforderlichen Länge auf der Autobahn installiert wird. Und an jedem Ort auf der Autobahn kann das Betanken von Wasserstoffautos arrangiert werden. METUWAK Kassetten können auch auf jedem Flachdach eines Gebäudes installiert werden - in Wohn-, Büro- und Industriegebäuden, um die Aktivitäten des letzteren zu gewährleisten.

5.5 METUWAK kann auch entlang von Bahnschienen mit der Installation von Kassetten sowohl zwischen den Gleisen als auch seitlich der Schiene eingesetzt werden.

5.6 Das Kassettenprinzip ermöglicht es, in eine Kassette bis zu 5-30 Motoren (Generatoren) niedriger Leistung mit Turbinen einzubauen, deren individuelle Ausgangsleistung jeweils zwischen 100-400 W liegt. Die Gesamtausgangsleistung der Kassette wird aus den einzelnen Kassetten in der KuME aufsummiert und von 500 W/h bis 5-6 kW/h an das Netz abgegeben.

5.7. Ein wichtiger Vorteil besteht darin, dass die Kassette im Betrieb aufgestellt wird und kein Grundwerk braucht, im Vergleich zu den dreiflügligen Windgeneratoren mit der Kippachse.

5.8. Man braucht für die Montage und den Anschluss der Kassette viel weniger Zeit, im Vergleich zu den anderen alleinstehenden Windgeneratoren.

5.9. METUWAK braucht keinen Metallabspanndraht (außer Kassettenversteifungen für Scheinwerfer).

5.10. METUWAK hat eine sehr wichtige Zusatzaufgabe: Erhöhung der Verkehrssicherheit, und zwar die Beleuchtung der Autobahnen. Und das ist ohne große Geldausgaben für die Anleuchtgeräte möglich im Vergleich zu den gewöhnlichen Metallleuchten, deren Montage viel Zeit, großen Arbeitsaufwand, Vorbereitung des Grundwerks und Anschluss durch die elektrischen Kabel fordert.

5.11. Die Montage der METUWAK braucht keine Entwaldung im Vergleich zu den Windgeneratoren mit der Kippachse.

5.12. Wenn es dunkel ist, so können die Segmenten der METUWAK die Energie aus anderer Quelle entnehmen (gewöhnliche Windgeneratoren muss man stoppen, weil der Verbrauch absinkt), damit die Energienetze Verbrauchsreduzierung in der Nacht beseitigen können.

Es gibt außerdem eine Möglichkeit, ein photoelektrisches Element (Photovoltaik) über der Kassette zu installieren in Regionen mit höheres Sonnenaktivität.

5.13. Für den METUWAK sind alle Tage des Jahres windig (im Vergleich zu den gewöhnlichen Windgeneratoren und Solarbatterien).

METUWAK ist vom Wetter unabhängig, weil der Wind dank den vorbeifahrenden Autos entsteht, unabhängig von den Wetterbedingungen.

5.14. METUWAK ist eine reparaturtaugliche Anlage, weil man jeden Teil leicht entfernt und mit einem anderen Teil ersetzt. Die Reparatur wird, wenn es nötig ist, im nahen Betrieb oder in der Niederlassung durchgeführt.

### 6. Beispielhafte Realisierungen der METUWAK

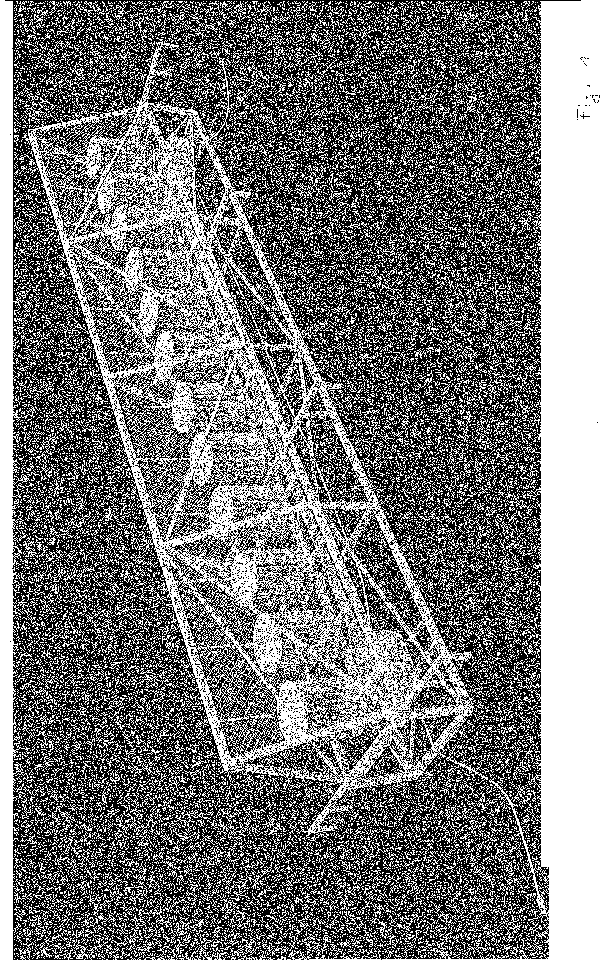

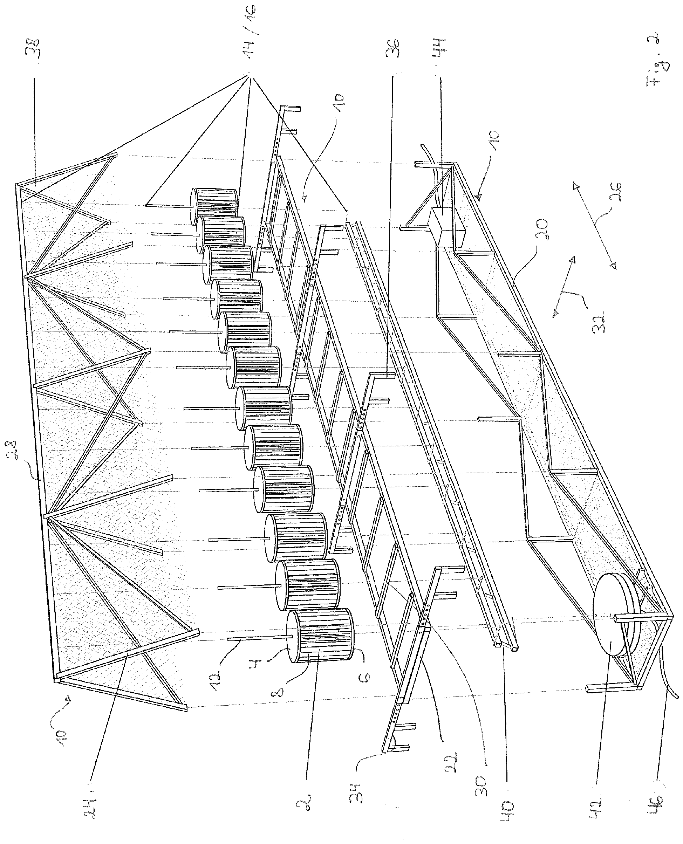

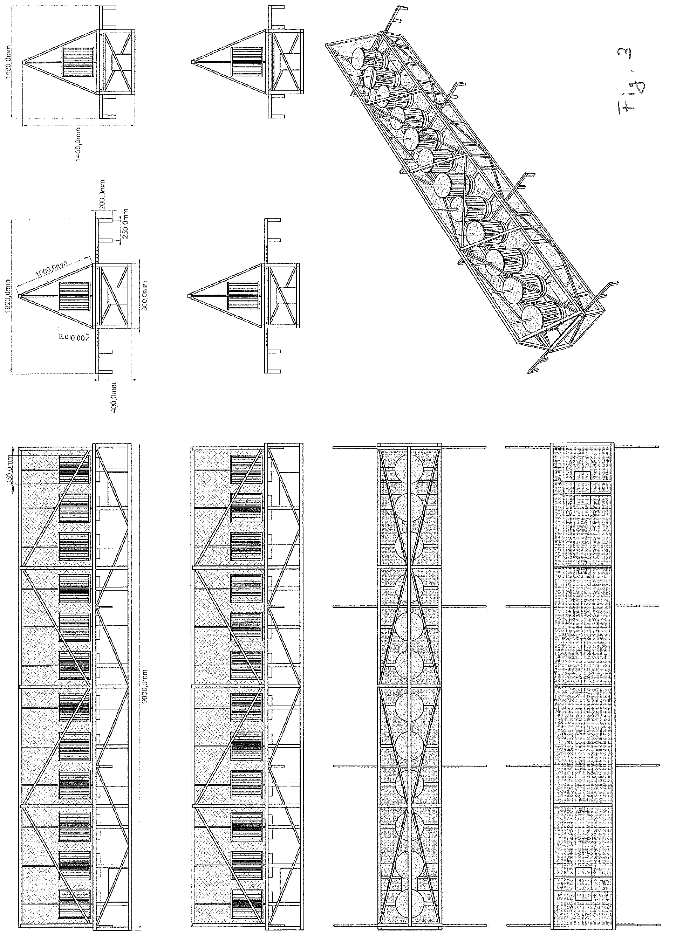

FIG. 1 zeigt eine beispielhafte Realisierung einer Mehrturbinen-Windantrieb (Kraftwerks-) Anlage nach Kolesnikov, METUWAK genannt, in perspektivischer Ansicht und FIG. 2 eine zugehörige Explosionsdarstellung. FIG. 3 zeigt entsprechende Ansichten und Schnitte

Die METUWAK ist dazu ausgelegt, den Fahrtwind vorbeifahrender Kraftfahrzeuge (oder Züge) in nutzbare elektrische Energie oder mechanische Arbeit zu konvertieren und umfasst ein Segment mit einer Mehrzahl (hier im Beispiel 12 Stück) gleichartiger, aufrechtstehender Windrotoren oder Windturbinen 2 mit jeweils vertikaler Rotationsachse (Vertikalrotor), die in einer Reihe hintereinander angeordnet sind. Die Abstände zwischen den Windturbinen 2 sind relativ klein, insbesondere kleiner als der jeweilige Turbinendurchmesser. Jede der Windturbinen 2 umfasst eine eine kreisförmige obere Endscheibe oder Abschlussscheibe 4 und eine entsprechende untere Abschlussscheibe 6 gleichen Durchmessers, zwischen denen die vertikal ausgerichteten Turbinenschaufeln 8 bzw. Rotorblätter angeordnet sind. Die beschriebene Rotorform ist als Savonius-Rotor bekannt. Stattdessen könnte auch ein Schalen-Rotor, ein Durchström-Rotor, ein Darrieus-Rotor oder eine Hybridform zum Einsatz kommen. Bevorzugt sind alle Rotoren innerhalb einen Segments vom gleichen oder zumindest vom ähnlichen Typ mit gleichartigen Abmessungen, so dass eine möglichst große Kompatibilität des Lauf- und Ansprechverhaltens für die beabsichtigte mechanische Kopplung (siehe unten) gegeben ist.

Eine Stützkonstruktion bzw. ein Stützgerüst 10 aus im Montageendzustand starr miteinander verbundenen balken- oder stabförmigen Trägern oder Streben, insbesondere Metallstreben, nimmt die Windturbinen 2 des dargestellten Segments auf. Der nach oben und unten überstehende Teil der jeweiligen Turbinenwelle 12 ist dazu in Lagern 14, 16 gehalten, die am Stützgerüst 10 angebracht oder in dieses integriert sind. Hier im Beispiel umfasst das Stützgerüst 10 ein hinsichtlich seiner Außenkontur im Querschnitt U-förmiges Unterteil 20, ein gitterartiges flaches und horizontal ausgerichtetes Mittelteil 22, und ein im Querschnitt dreieckiges, nach oben spitz zulaufendes Oberteil 24 mit einem sich in Längsrichtung 26 erststreckenden oberen Längsbalken 28. In oder an dem Längsbalken 28 befinden sich die oberen Lager 14 für die Turbinenwelle 12. Die unteren Lager 16 befinden sich in oder an Querbalken 30 des Mittelteils 22.

Das Stützgerüst 10 selbst oder die Einheit aus Stützgerüst 10 und Windturbinen 2 und ggf. weiteren Einbauten wird auch als Kassette oder Segment bezeichnet.

Am Mittelteil 22 befinden sich in Querrichtung 32 seitlich hinausragende Auflager 34 zur Fixierung des Segments an der Mittelleitplanke oder Fahrbahntrennung einer Autobahn oder ähnlichen Fahrbahn für Kraftfahrzeuge. Die Auflager 34 sind mit einstellbaren Fixierungen 36 zur dauerhaften und belastbaren Befestigung an der Mittelleitplanke oder Fahrbahntrennung ausgestattet.

Die schräg gestellten Seitenwände des als dreieckigen Prisma geformten Oberteils 24 sind mit Fangnetzen oder kurz Netzen 38 aus Metall oder Kunststoff bespannt, wobei zwischen den Netzen 38 und den Windturbinen 2 ein hinreichend großer Abstand besteht, um die Drehung der Windturbinen 2 nicht zu behindern. Die Netze 38 dienen zum Auffangen und Zurückhalten von Bruchstücken im Falle des Bruches einer Windturbine 2. An den beiden dreieckigen Stirnseiten des Segments können ebenfalls Netze gespannt sein. Die Maschenweite der Netze 38 ist derart gewählt, dass einerseits für den Straßenverkehr gefährliche Bruchstücke zurückgehalten werden, und andererseits die Windströmung hindurch nur unwesentlich behindert wird.

Die Windturbinen 2 des Segments treiben über eine als Rotationsübertragungsmechanismus 40 (RÜM) bezeichnete Kopplung eine gemeinsame Abtriebswelle 42 an, die ihrerseits einen elektrischen Generator, ein Schwungrad oder eine Arbeitsmaschine, etwa einen Kompressor, antreibt. Die Abtriebswelle 42 und der Rotationsübertragungsmechanismus 40 sind bevorzugt im Unterteil des Stützgerüstes 10 angeordnet. Der Generator, das Schwungrad oder die Arbeitsmaschine können ebenfalls dort angeordnet sein, und zwar möglichst tief, oder alternativ außerhalb des Stützgerüstes 10. Ebenso können dort eine Kontroll- und Messgeräte Einheit 44 (KuME) und/oder ggf. weitere elektrische Komponenten angeordnet sein, wie etwa Akkumulatoren. Elektrische Anschluss- und/oder Steuerleitungen 46 können seitlich oder unten aus dem Unterteil 20 herausgeführt sein.

An den unteren Abschlussscheiben 6 der Windturbinen 2 sind Pleuel oder Kurbeln 48 exzentrisch angelenkt, die die Rotationsbewegung aller Windturbinen 2 auf eine gemeinsame, in Längsrichtung 26 verlaufende Schubstange 50 übertragen, die dadurch eine oszillierende Schubbewegung ausführt (Prinzip der Schubkurbel). Der Oszillationsbewegung in Längsrichtung 26 ist eine Oszillationsbewegung in Querrichtung 32 überlagert, so dass insgesamt sich ein beliebiger Fixpunkt der Schubstange 50 auf einer elliptischen Bahn in einer Horizontalebene bewegt. Die Schubstange 50 kann über ein Pleuel oder eine Kurbel direkt mit der Abtriebswelle 42 verbunden sein, so dass ein die Drehbewegung aller Windturbinen 2 koppelndes und über den Kurbelmechanismus auf die Abtriebswelle 42 übertragendes Schubkurbelgetriebe als Variante eines Koppelgetriebes verwirklicht ist. Hier im Beispiel ist die von den Windturbinen 2 beaufschlagte erste Schubstange 50 über mehrere Pleuel oder Kurbeln 52 mit einer unterhalb ihr liegenden zweiten Schubstange 54 gekoppelt, die ihrerseits über eine Kurbel 56 die Abtriebswelle 42 beaufschlagt. Die Kurbeln 48 der ersten Gruppe, die die erste Schubstange 50 mit den Windrotoren verbinden, und die Kurbeln 52 der zweiten Gruppe, die die beiden Schubstangen 50, 54 miteinander verbinden, weisen an ihren mit der ersten Schubstange 50 verbundenen Enden jeweils die gleiche Drehachse auf, können sich aber unabhängig voneinander drehen. Im Ergebnis bewegt sich auch die zweite Schubstange 54 elliptisch oszillierend in einer Horizontalebene, und zwar phasenversetzt zur Bewegung der ersten Schubstange 50. Diese zweistufige Ausführung des Koppelgetriebes ermöglicht eine symmetrische Kraft und Gewichtsverteilung. Durch die RÜM 40 wird erreicht, dass sich die Drehmomente der einzelnen Windturbinen 2 an der Abtriebswelle 42 addieren, wodurch beispielsweise ein entsprechend leistungsfähiger Generator angetrieben werden kann.

Auf die Kurbeln 48 und/oder 56 kann ggf. verzichtet werden, wenn die Schubstangen 50 und/oder 54 direkt exzentrisch an den rotierenden Turbinen- oder Wellenteilen gelagert sind.

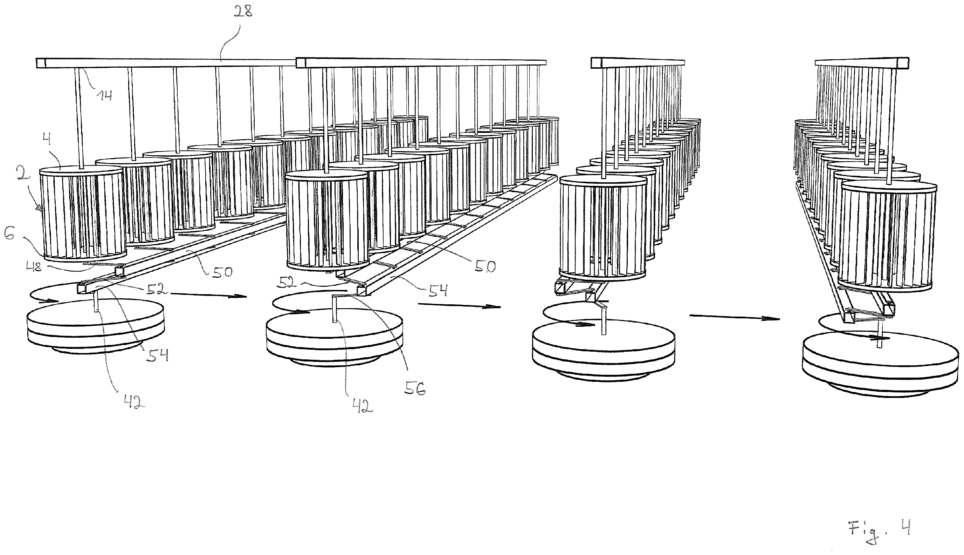

Der beschriebene detaillierte Aufbau des RÜM 40 und seine Kinematik gehen aus FIG. 4 hervor, in der der Bewegungsablauf in vier nebeneinander angeordnete Momentaufnahmen aufgelöst ist.

Alternativ oder zusätzlich können einzelne oder mehrere oder sämtliche der Windturbinen 2 über ihre Turbinenwelle 12 an einen ausschließlich ihr zugeordneten, im Vergleich zu dem beschriebenen Kassettengenerator eher kleinen und leistungsschwachen Generator angeschlossen sein.

Im Fall einer in die METUWAK integrierten Generator-Akkumulator Einheit kann die bei entsprechend hoher Windstärke erzeugte und im Akkumulator gespeicherte elektrische Energie dazu verwendet werden, um bei schwachem Wind den Generator als Elektromotor, alternativ einen separaten Hilfsmotor, zu betreiben und auf diese Weise die Rotation der Windturbinen 2 über den anfänglichen Reibungswiderstand hinweg in Gang zu setzen (Anlaufhilfe). Sobald dieser Widerstand überwunden ist, kann wieder auf Generatorbetrieb zurückgeschaltet werden. Mehrere, ggf. sogar viele der Segmente können entlang der Fahrbahn hintereinander installiert werden, mit oder ohne Abstand dazwischen. Anstelle von oder zusätzlich zu einer Installation im Bereich des Mittelstreifens kann eine Installation im/am Seitenstreifen, mit entsprechend eingestellter Drehrichtung der Windturbinen 2, vorgesehen sein.

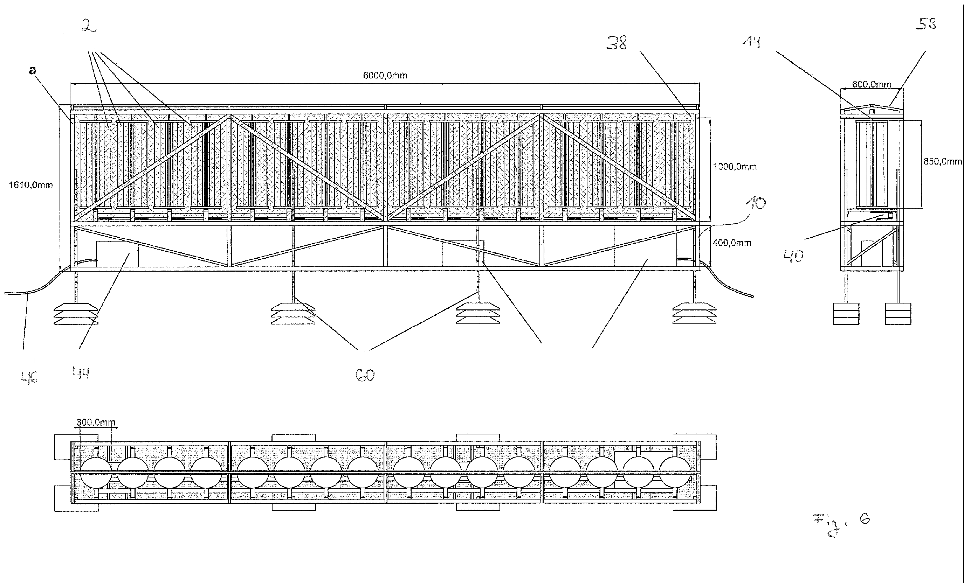

Die in FIG. 5 in perspektivischer Ansicht und in FIG. 6 in drei zugehörigen Seitenansichten dargestellte Variante der METUWAK unterscheidet sich von der bislang beschriebenen zum einen dadurch, dass das Oberteil 24 des Stützgerüstes 10 bzw. der Kassette kastenförmig mit rechteckigem Querschnitt ausgebildet ist. Die Windturbinen 2 (hier im Beispiel 16 Stück) sind innerhalb des Kastens angeordnet, wobei die beiden Seitenwände und ggf. die Stirnflächen wieder mit Netzen 38 gesichert sind.

Auf der Oberseite des Kastens kann eine Deckelplatte zum Schutz der darunterliegenden Komponenten angeordnet sein. Hier im Beispiel gemäß FIG. 3 ist eine Abdeckung durch Solarpaneele 58 zur zusätzlichen Energiegewinnung bei Sonneneinstrahlung vorgesehen.

Zum anderen ist bei dieser Variante eine aufgeständerte Aufstellung auf dem Boden der Fahrbahn oder des Mittelstreifens vorgesehen. Das Unterteil 20 des Stützgerüstes 10 ist dazu mit geeigneten Stützen 60 ausgestatten, die bevorzugt am Boden verankert werden. Alternativ oder zusätzlich können möglichst tief liegend Ballastköper 62, etwa an den Stützen 60 oder an/im Unterteil 20, vorgesehen sein, so dass deren Eigengewicht eine sicherere und unverrückbare Aufstellung der Kassette unterstützt. Beispielsweise können schwere Akkumulatoren als Ballastkörper dienen.

Alternativ könnte aber auch hier wieder eine Befestigung der Kassette an einer vorhandenen Betonabtrennung oder dergleichen zwischen den Fahrbahnen erfolgen.

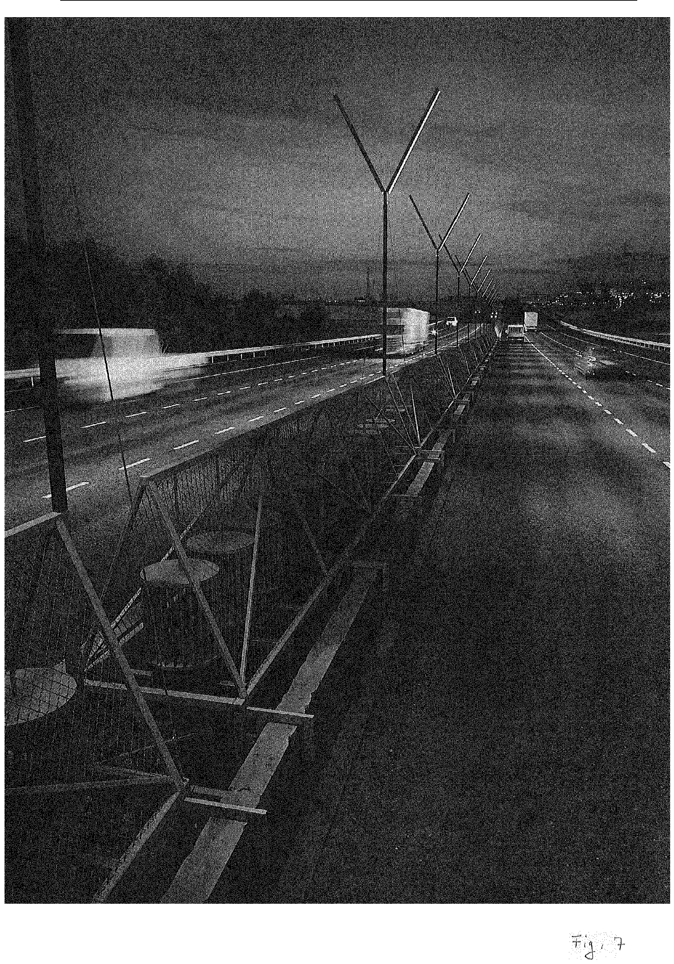

FIG. 7 zeigt eine konkrete Anwendungssituation mit mehreren hintereinander auf Betonplatten einer Fahrbahntrennung einer Autobahn installierten METUWAK Segmenten. Zusätzlich dargestellt sind optionale Straßenlaternen, die am Stützgerüst befestigt werden können, um die die Fahrbahn auszuleuchten. Derartige Leuchtmittel werden direkt durch die METUWAK mit Strom versorgt.

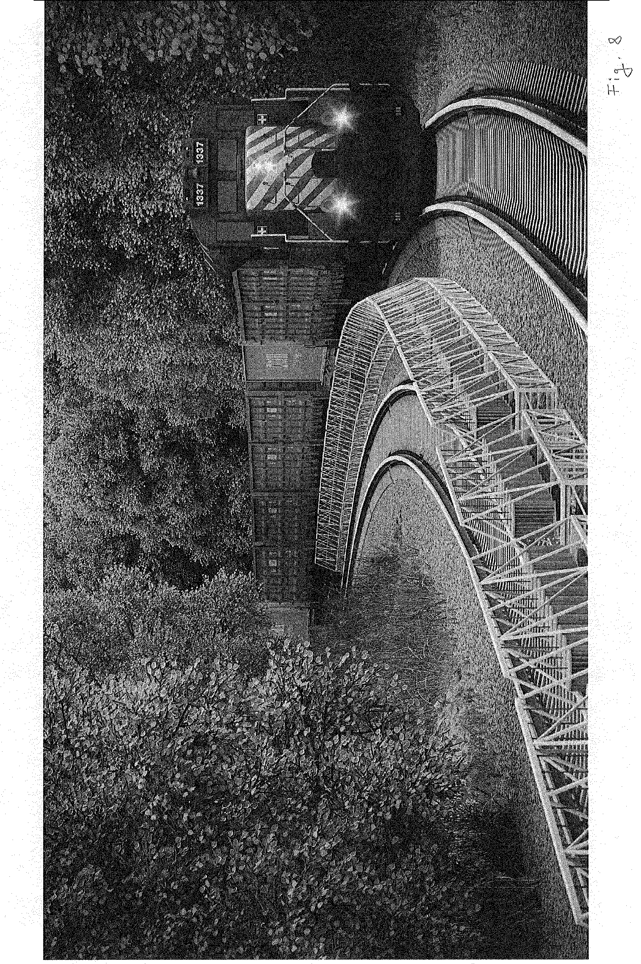

FIG. 8 zeigt eine entsprechende Anwendung entlang von Bahnschienen. In Kurvenabschnitten sind die geradlinigen Segmente kürzer gehalten, um dem Kurvenverlauf folgen zu können.

### Bezugszeichenliste

- 2: Windturbine
- 4: Abschlussscheibe
- 6: Abschlussscheibe
- 8: Turbinenschaufel
- 10: Stützgerüst
- 12: Turbinenwelle
- 14: Lager
- 16: Lager
- 20: Unterteil
- 22: Mittelteil
- 24: Oberteil
- 26: Längsrichtung
- 28: Längsbalken
- 30: Querbalken
- 32: Querrichtung
- 34: Auflager
- 36: Fixierung
- 38: Netz
- 40: Rotationsübertragungsmechanismus
- 42: Abtriebswelle
- 44: Kontroll- und Messgeräte Einheit
- 46: Anschluss- und Steuerleitungen
- 48: Kurbel
- 50: Schubstange
- 52: Kurbel
- 54: Schubstange
- 56: Kurbel
- 58: Solarpaneel
- 60: Stütze
- 62: Ballastkörper

## Patentansprüche

1. Windkraftanlage zur Nutzung des Fahrtwindes von Kraftfahrzeugen mit einer Mehrzahl von Windturbinen (2) mit jeweils vertikaler Drehachse, die in einer Reihe hintereinander in einem Stützgerüst (10) angeordnet sind, wobei die Windturbinen (2) über einen Rotationsübertragungsmechanismus (40) eine gemeinsame Abtriebswelle (42) antreiben, **dadurch gekennzeichnet, dass** der Rotationsübertragungsmechanismus (40) nach Art eines Schubkurbelgetriebes aufgebaut ist.

2. Windkraftanlage nach Anspruch 1, wobei der Rotationsübertragungsmechanismus (40) zwei phasenversetzt zueinander oszillierende Schubstangen (50, 54) umfasst.

3. Windkraftanlage nach einem der vorangehenden Ansprüche, wobei die Abtriebswelle (42) einen Generator, ein Schwungrad und/oder eine Arbeitsmaschine antreibt.

4. Windkraftanlage nach einem der vorangehenden Ansprüche, wobei das Stützgerüst (10) ein die Windturbinen (2) umschließendes Oberteil (24) aufweist.

5. Windkraftanlage nach einem der vorangehenden Ansprüche, wobei zumindest die Seitenwände des Oberteils (24) mit Netzen (38) zum Auffangen von Bruchstücken im Falles eines Turbinenbruchs gesichert sind.

6. Windkraftanlage nach einem der vorangehenden Ansprüche, wobei am Stützgerüst (10) Auflagen (34) und/oder Fixierungen (36) zur Montage an einer Fahrbahnabtrennung einer Autobahn oder ähnlichen Straße angeracht sind.

7. Windkraftanlage nach einem der vorangehenden Ansprüche, wobei am Stützgerüst (10) Stützen (60) zur Bodenaufstellung angebracht sind.

8. Windkraftanlage nach einem der vorangehenden Ansprüche, wobei am Stützgerüst (10) Straßenlaternen angebracht sind, die mit von der Windkraftanlage erzeugtem elektrischen Strom betrieben werden.

9. Windkraftanlage nach einem der vorangehenden Ansprüche, wobei die Windturbinen (2) jeweils als Savonius-Rotor ausgebildet sind.

## Claims

1. A wind power plant for utilising the headwind of motor vehicles, having a plurality of wind turbines (2) each having a vertical axis of rotation, which are arranged in a support frame (10) in a row one behind the other, wherein the wind turbines (2), via a rotation transmission mechanism (40), drive a common output shaft (42), **characterised in that** the rotation transmission mechanism (40) is constructed in the manner of a slider crank mechanism.

2. The wind power plant according to Claim 1, wherein the rotation transmission mechanism (40) includes two push rods (50, 54) which oscillate in a phase-shifted manner relative to one another.

3. The wind power plant according to any one of the preceding claims, wherein the output shaft (42) drives a generator, a flywheel and/or a working machine.

4. The wind power plant according to any one of the preceding claims, wherein the support frame (10) comprises an upper part (24) enclosing the wind turbines (2).

5. The wind power plant according to any one of the preceding claims, wherein at least the side walls of the upper part (24) are secured with nets (38) for catching fragments in the event of a turbine fracture.

6. The wind power plant according to any one of the preceding claims, wherein on the support frame (10) supports (34) and/or fixings (36) for mounting to a roadway partition of a highway or similar road are attached.

7. The wind power plant according to any one of the preceding claims, wherein on the support frame (10) supports (60) for ground-erection are attached.

8. The wind power plant according to any one of the preceding claims, wherein on the support frame (10) road lanterns are attached, which are operated with electric current generated by the wind power plant.

9. The wind power plant according to any one of the preceding claims, wherein the wind turbines (2) are each formed as a savonius rotor.

## Revendications

1. Eolienne pour l'exploitation du vent de vitesse des véhicules automobiles comportant une pluralité d'éoliennes (2), avec respectivement un axe de rotation vertical, qui sont disposées en rangée les unes derrière les autres dans un cadre de support (10), dans laquelle les turbines éoliennes (2) entraînent via un mécanisme de transmission de rotation (40) un arbre de sortie commun (42), **caractérisée en ce que** le mécanisme de transmission de rotation (40) est réalisé à la manière d'un mécanisme à manivelle.

2. Eolienne selon la revendication 1, dans laquelle le mécanisme de transmission de rotation (40) comprend deux poussoirs oscillants déphasés (50, 54).

3. Eolienne selon une des revendications précédentes, dans laquelle l'arbre de sortie (42) entraîne une génératrice, un volant et/ou une machine de travail.

4. Eolienne selon une des revendications précédentes, dans laquelle le cadre de support (10) présente une partie supérieure (24) renfermant les turbines éoliennes (2).

5. Eolienne selon une des revendications précédentes, dans laquelle au moins les parois latérales de la partie supérieure (24) sont sécurisées par des filets (38) pour attraper les fragments en cas de rupture de turbine.

6. Eolienne selon une des revendications précédentes, dans laquelle sur le cadre de support (10) des supports (34) et/ou des fixations (36) destinés à être montés sur une séparation de chaussée d'une autoroute ou route similaire sont montés.

7. Eolienne selon une des revendications précédentes, dans laquelle sur le cadre de support (10) des supports (60) sont fixés au sol de l'installation.

8. Eolienne selon une des revendications précédentes, dans laquelle des lampadaires sont fixés au cadre de support (10), qui sont actionnés avec l'électricité produite par l'éolienne.

9. Eolienne selon une des revendications précédentes, dans laquelle les turbines éoliennes (2) sont chacune conçues comme un rotor Savonius.
